# EUROPEAN PATENT APPLICATION

(11) **EP 2 921 956 A1**
(43) Date of publication of application: **23.09.2015**
(21) Application number: 14199634.8
(22) Date of filing: 22.12.2014
(51) Int. Cl.: G06F 9/50, G06F 11/26

(54) **Information processing system**

(30) Priority: 17.03.2014 JP 2014053665
(71) Applicant: FUJITSU LIMITED, Kawasaki-shi, Kanagawa 211-8588 (JP)
(72) Inventor: Kondoh, Sayako, Kanagawa, 211-8588 (JP)
(74) Representative: Hoffmann Eitle

(57) **Abstract**

An information processing system includes a processor. The processor is configured to acquire availability of a resource in a second site that holds data used for restoration of a system operating in a first site. The processor is configured to identify a level to which the availability conforms, from among a plurality of levels corresponding to respective sizes of resource to be reserved for rehearsal processing for the restoration. The processor is configured to start the rehearsal processing corresponding to the identified level.

## Description

### FIELD

The embodiments discussed herein are an information processing system.

### BACKGROUND

There has been a mechanism for restoring a business system in a site (hereinafter, referred to as a standby site) in a case where, in a cloud environment, the relevant business system in another site (hereinafter, referred to as an operating site) is caused to halt by any reason. The standby site holds, for example, data synchronized with data (configuration information of a system, a system image, user data, and so forth) held in the operating site. At the time of restoration in the standby site, a business system equivalent to that in the operating site is constructed using this data.

In addition, under normal circumstances, a rehearsal of restoration is performed occasionally in order to confirm that the operation of restoration is normally performed.

The standby site includes a resource for constructing the business system. However, in some cases, this resource is used for another purpose. Accordingly, the size of an available resource in the standby site fluctuates, and in some cases, an available resource to be used at the time of restoration is insufficient.

Therefore, even if a rehearsal of restoration is intended to be performed, a resource is insufficient and thus, it is difficult to perform the rehearsal of restoration, in some cases. In this way, if an environment for the rehearsal of restoration is not put in place, it is difficult to confirm the operation of restoration.

As a related technique, as for an embedded device such as a printer, a technique has been proposed in which an amount of resource to be used in an execution environment is obtained by an embedded application and it is verified that a restriction condition for the resource in the execution environment is satisfied. Even if resource insufficiency is predicted before introduction in this way, the fact remains that an execution environment for the embedded application is not put in place.

Related techniques are disclosed in, for example, Japanese Laid-open Patent Publication No. 2006-244450, Japanese Laid-open Patent Publication No. 2000-347997, and Japanese Laid-open Patent Publication No. 2010-198060.

An object of the invention is to make it possible to selectively confirm a restoration operation at an arbitrarily operable level.

### SUMMARY

According to an aspect of the present invention, provided is an information processing system including a processor. The processor is configured to acquire availability of a resource in a second site that holds data used for restoration of a system operating in a first site. The processor is configured to identify a level to which the availability conforms, from among a plurality of levels corresponding to respective sizes of resource to be reserved for rehearsal processing for the restoration. The processor is configured to start the rehearsal processing corresponding to the identified level.

According to the present invention, it is possible to selectively confirm a restoration operation at an arbitrarily operable level

### BRIEF DESCRIPTION OF DRAWINGS

FIG. 1 is a diagram illustrating an example of a configuration of an information processing system;
FIG. 2 is a diagram illustrating an example of deployment of virtual servers;
FIG. 3 is a diagram illustrating an example of an allocated amount table;
FIG. 4 is a diagram illustrating routine processing;
FIG. 5 is a diagram illustrating an example of a functional configuration of a management device;
FIG. 6 is a diagram illustrating an example of a used amount table;
FIG. 7 is a diagram illustrating an example of a first reserved amount table;
FIG. 8 is a diagram illustrating an example of a second reserved amount table for a first level;
FIG. 9 is a diagram illustrating an example of the second reserved amount table for a second level;
FIG. 10 is a diagram illustrating an example of the second reserved amount table for a third level;
FIG. 11 is a diagram illustrating an example of the second reserved amount table for a fourth level;
FIG. 12 is a diagram illustrating an example of the second reserved amount table for a fifth level;
FIG. 13 is a diagram illustrating a flow of a preparation processing;
FIG. 14 is a diagram illustrating a flow of an identification processing (A);
FIG. 15 is a diagram illustrating a flow of an identification processing (B);
FIG. 16 is a diagram illustrating a flow of an identification processing (C);
FIG. 17 is a diagram illustrating a flow of an identification processing (D);
FIG. 18 is a diagram illustrating a flow of a setting processing;
FIG. 19 is a diagram illustrating a flow of the setting processing;
FIG. 20 is a diagram illustrating examples of an available amount of resource and a determination result;
FIG. 21 is a diagram illustrating a flow of a control processing;
FIG. 22 is a diagram illustrating a flow of a rehearsal processing;
FIG. 23 is a diagram illustrating a flow of the rehearsal processing; and
FIG. 24 is a diagram illustrating an example of a hardware configuration of a computer.

### DESCRIPTION OF EMBODIMENTS

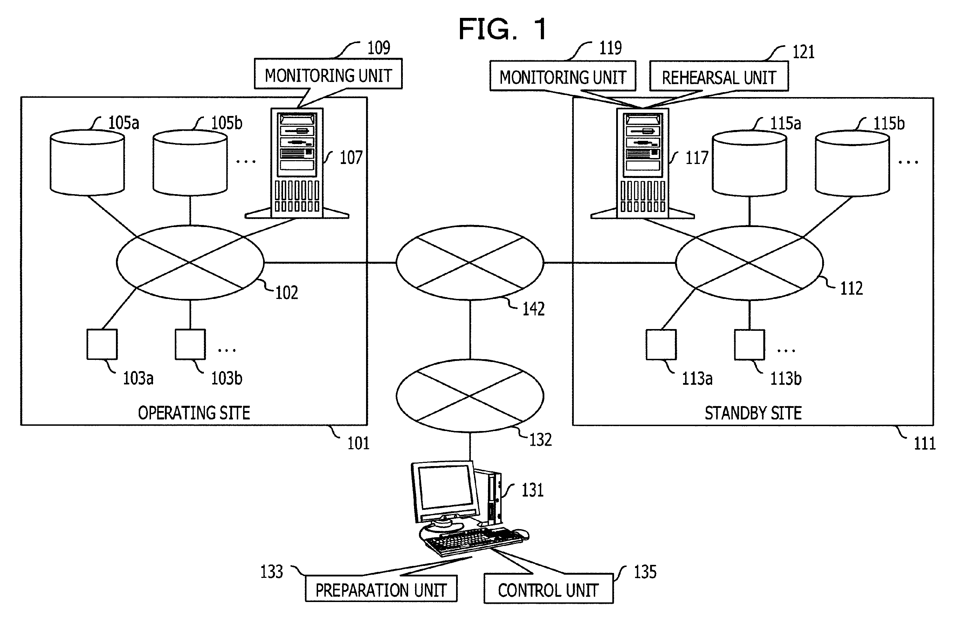

FIG. 1 illustrates an example of a configuration of an information processing system. In an operating site 101, a business system is operated. The operating site 101 includes physical servers 103 (a physical server 103a, a physical server 103b, and so forth), storage devices 105 (a storage device 105a, a storage device 105b, and so forth), and a management server 107, connected to one another through a local area network (LAN) 102. In each of the physical servers 103, virtual servers used in a business system are deployed. The management server 107 manages virtual environments such as the virtual servers and a virtual network, along with hardware devices such as the physical servers 103 and the storage devices 105. The management server 107 includes a monitoring unit 109 that monitors states of the hardware devices such as the physical servers 103 and the storage devices 105 and the virtual environments such as the virtual servers and the virtual network.

In a case where, for example, the operating site 101 is damaged and the business system in the operating site 101 halts, the relevant business system is restored in a standby site 111. In other words, an identical system to the business system in the operating site 101 is reconstructed in the standby site 111.

Similar to the operating site 101, the standby site 111 includes physical servers 113 (a physical server 113a, a physical server 113b, and so forth), storage devices 115 (a storage device 115a, a storage device 115b, and so forth), and a management server 117, connected to one another through a LAN 112. In each of the physical servers 113, virtual servers for the business system is deployed at the time of restoration. However, in some cases, virtual servers other than that may be deployed in the physical servers 113 at normal time. Similar to the management server 107, the management server 117 manages virtual environments such as the virtual servers and a virtual network, along with hardware devices such as the physical servers 113 and the storage devices 115. The management server 117 includes a monitoring unit 119 that monitors states of the hardware devices such as the physical servers 113 and the storage devices 115 and the virtual environments such as the virtual servers and the virtual network. Furthermore, the management server 117 includes a rehearsal unit 121 that performs rehearsal processing for restoration. Note that each of the above-mentioned virtual servers is an example of a virtual machine.

In a case of considering a natural disaster that is caused by, for example, an earthquake and spreads through a wide area, the standby site 111 is provided in a location away from the operating site 101. In this example, the LAN 102 in the operating site 101 and the LAN 112 in the standby site 111 are connected to each other through a wide area network (WAN) 142. However, in a case of preparing for a local failure such as, for example, a failure of a device, the standby site 111 may be provided in a location near the operating site 101. In such a case, the standby site 111 may be provided in the LAN 102 shared by the operating site 101. In the present embodiment, a rehearsal for confirming that the business system is restored as scheduled is performed in the standby site 111.

A management device 131 is connected to the WAN 142 through a LAN 132, and manages the operating site 101 and the standby site 111. The management device 131 includes a preparation unit 133 that performs a preparation for controlling a rehearsal, and a control unit 135 that controls the rehearsal. In place of the management server 117, the management device 131 may include the rehearsal unit 121.

The management device 131 may be connected to the LAN 102 in the operating site 101. In that case, the management device 131 may include the monitoring unit 109.

The management device 131 may be connected to the LAN 112 in the standby site 111. In that case, the management device 131 may include the monitoring unit 119.

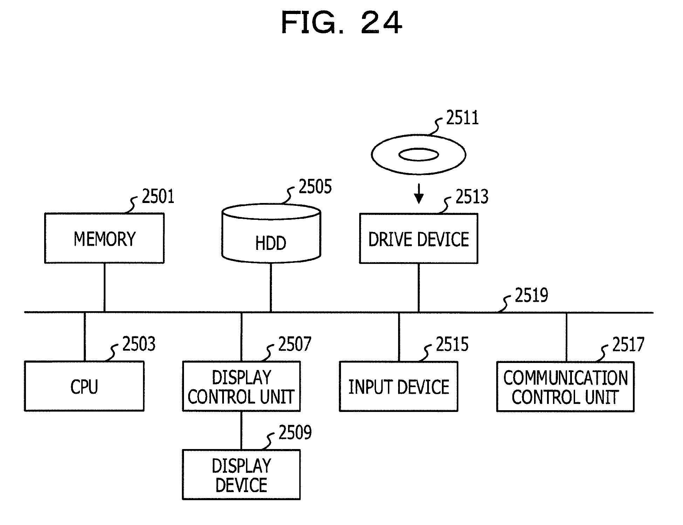

The monitoring unit 109, the monitoring unit 119, the rehearsal unit 121, the preparation unit 133, and the control unit 135 are realized using hardware resources (for example, illustrated in FIG. 24) and a program that causes a processor to execute a process described below.

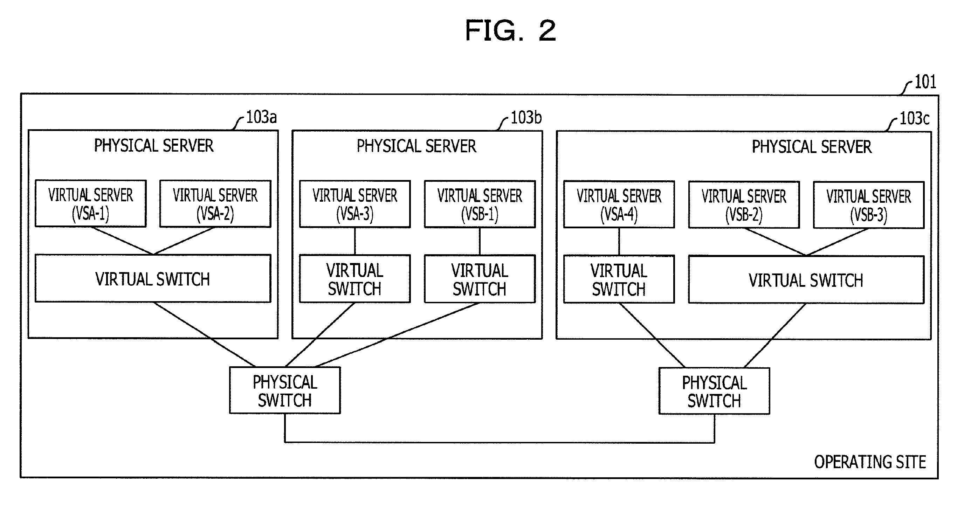

FIG. 2 illustrates an example of deployment of virtual servers. The operating site 101 includes physical servers 103a to 103c. In the physical server 103a, a virtual server whose identifier (ID) is "VSA-1" and a virtual server whose ID is "VSA-2" are deployed. In the physical server 103b, a virtual server whose ID is "VSA-3" and a virtual server whose ID is "VSB-1" are deployed. In the physical server 103c, a virtual server whose ID is "VSA-4", a virtual server whose ID is "VSB-2", and a virtual server whose ID is "VSB-3" are deployed.

Each virtual server is connected to a virtual switch provided in the respective physical servers 103. Each virtual switch is connected to one of physical switches provided in the operating site 101. The virtual servers connected through the virtual switches each perform data communication through the virtual network.

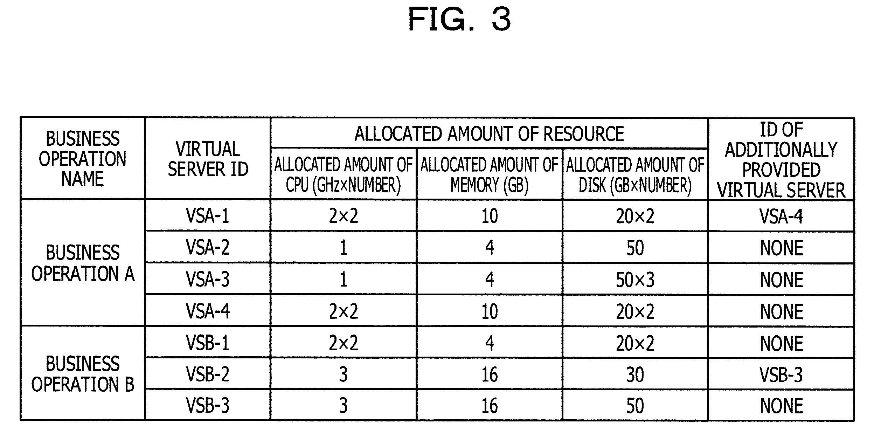

Resources are allocated to these virtual servers. The allocation of resources will be described using an example of an allocated amount table illustrated in FIG. 3. In the example of the allocated amount table illustrated in FIG. 3, a record is provided for each virtual server. Each record includes a field for setting a name of a business operation to which the relevant virtual server is provided, a field for setting an ID of the relevant virtual server, a field for setting an amount of resource allocated to the relevant virtual server, and a field for setting an ID of a virtual server additionally provided for redundancy regarding the relevant virtual server. The redundancy may be set in a form other than the field in this example. The field for setting an allocated amount of resource includes a field for setting an allocated amount of central processing unit (CPU) (GHz×number), a field for setting an allocated amount of memory (GB), and a field for setting an allocated amount of disk (GB×number). In a case where the number of CPUs is "1", the notation of "×1" is omitted. In a case where the number of disks is "1", the notation of "×1" is omitted. Note that while, in the allocated amount table illustrated in FIG. 3, the fields of a same business operation name (for example, a "business operation A") are combined, this description means that the same business operation name is set in these fields.

The first record in this table indicates that a virtual server whose ID is "VSA-1" is provided to a "business operation A". This record also indicates that "2" CPUs of "2" GHz are allocated to the relevant virtual server, a memory of "10" GB is allocated thereto, and "2" disks of "20" GB are allocated thereto. Furthermore, this record indicates that a virtual server whose ID is "VSA-4" is additionally provided for the redundancy of the relevant virtual server.

The second record in this table indicates that a virtual server whose ID is "VSA-2" is provided to the "business operation A". This record also indicates that a CPU of "1" GHz is allocated to the relevant virtual server, a memory of "4" GB is allocated thereto, and a disk of "50" GB is allocated thereto. Furthermore, this record indicates that no virtual server is additionally provided for the redundancy of the relevant virtual server.

The third record in this table indicates that a virtual server whose ID is "VSA-3" is provided to the "business operation A". This record indicates that a CPU of "1" GHz is allocated to the relevant virtual server, a memory of "4" GB is allocated thereto, and "3" disks of "50" GB are allocated thereto. Furthermore, this record indicates that no virtual server is additionally provided for the redundancy of the relevant virtual server.

The fourth record in this table indicates that the virtual server whose ID is "VSA-4" is provided to the "business operation A". This record indicates that "2" CPUs of "2" GHz are allocated to the relevant virtual server, a memory of "10" GB is allocated thereto, and "2" disks of "20" GB are allocated thereto. Furthermore, this record indicates that no virtual server is additionally provided for the redundancy of the relevant virtual server.

The fifth record in this table indicates that a virtual server whose ID is "VSB-1" is provided to a "business operation B". This record indicates that "2" CPUs of "2" GHz are allocated to the relevant virtual server, a memory of "4" GB is allocated thereto, and "2" disks of "20" GB are allocated thereto. Furthermore, this record indicates that no virtual server is additionally provided for the redundancy of the relevant virtual server.

The sixth record in this table indicates that a virtual server whose ID is "VSB-2" is provided to the "business operation B". This record indicates that a CPU of "3" GHz is allocated to the relevant virtual server, a memory of "16" GB is allocated thereto, and a disk of "30" GB is allocated thereto. Furthermore, this record indicates that a virtual server whose ID is "VSB-3" is additionally provided for the redundancy of the relevant virtual server.

The seventh record in this table indicates that the virtual server whose ID is "VSB-3" is provided to the "business operation B". This record indicates that a CPU of "3" GHz is allocated to the relevant virtual server, a memory of "16" GB is allocated thereto, and a disk of "50" GB is allocated thereto. Furthermore, this record indicates that no virtual server is additionally provided for the redundancy of the relevant virtual server.

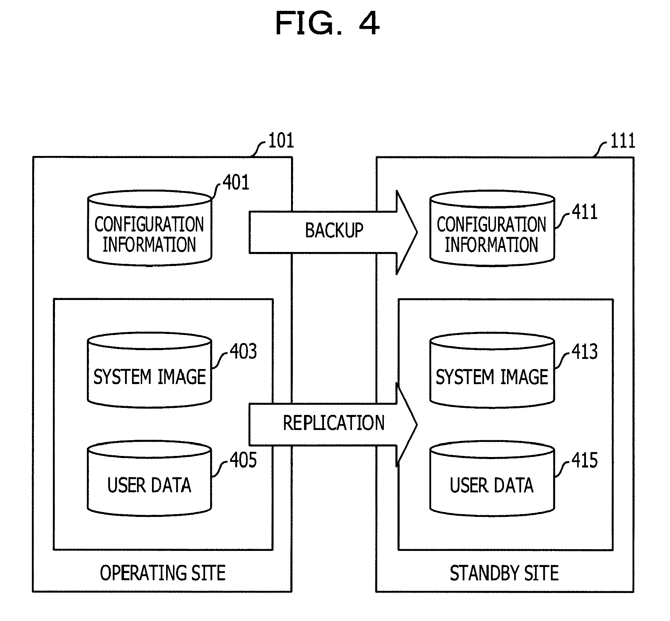

Next, routine processing in the system to be restored will be described. Regardless of the timing of restoration processing or rehearsal processing, the routine processing is performed routinely. FIG. 4 illustrates the routine processing. When the configuration of the business system is changed, the management server 107 generates configuration information 401. The configuration information 401 is information relating to the configuration of the business system such as a relationship between data (a system image or a pool) stored in the storage devices 105 and the physical servers 103 or virtual servers in which the data is to be deployed. The generated configuration information 401 is stored in the storage devices 105. The management server 107 transmits, using a backup function, the configuration information 401 to the management server 117. The management server 117 stores the configuration information in the storage devices 115, as configuration information 411.

In addition, a system image 403 and user data 405, stored in the storage devices 105 in the management server 107, are replicated into a system image 413 and user data 415, stored in the storage devices 115, using replication functions of the storage devices 105 and the storage devices 115. Since the routine processing is similar to related arts, a more detailed description will be omitted.

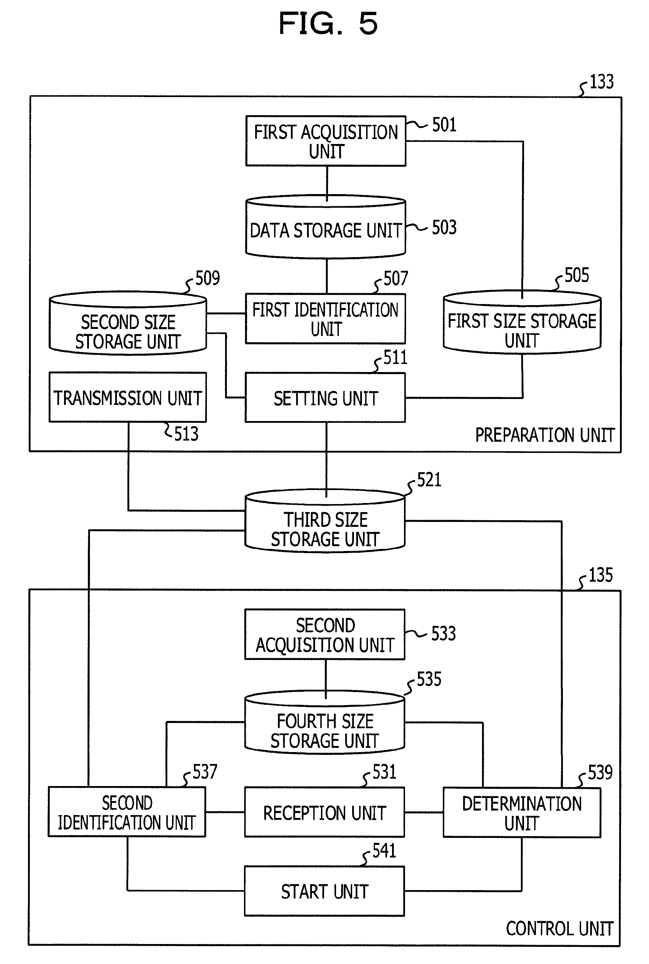

FIG. 5 illustrates an example of a functional configuration of the management device 131. As illustrated in FIG. 1, the management device 131 includes the preparation unit 133 that performs preparation processing. The preparation unit 133 includes a first acquisition unit 501, a data storage unit 503, a first size storage unit 505, a first identification unit 507, a second size storage unit 509, a setting unit 511, and a transmission unit 513.

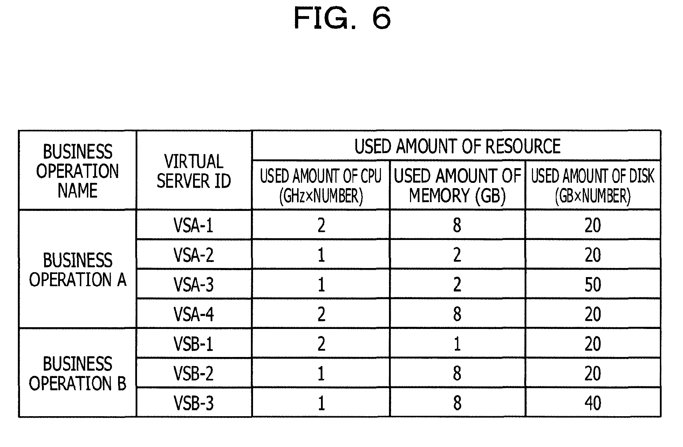

The first acquisition unit 501 acquires monitoring data of the operating site 101. The data storage unit 503 stores therein the monitoring data of the operating site 101. The monitoring data includes, for example, the used amounts of resource (the used amount of CPU, the used amount of memory, and the used amount of disk) in a virtual server, collected at predetermined intervals. The first size storage unit 505 stores therein the allocated amount table illustrated in FIG. 3. The first identification unit 507 identifies a used amount of resource at a time point within a monitoring time period. The second size storage unit 509 stores therein a used amount table in which a used amount of resource is set. The used amount table will be described later with reference to FIG. 6. The setting unit 511 sets, in a first reserved amount table and second reserved amount tables, amounts of resource to be reserved in the standby site 111 in a rehearsal regarding the relevant business operation. The transmission unit 513 transmits, to the rehearsal unit 121, the first reserved amount table and the second reserved amount tables.

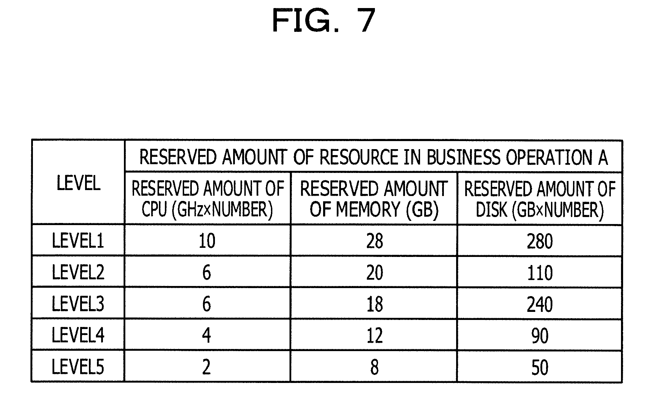

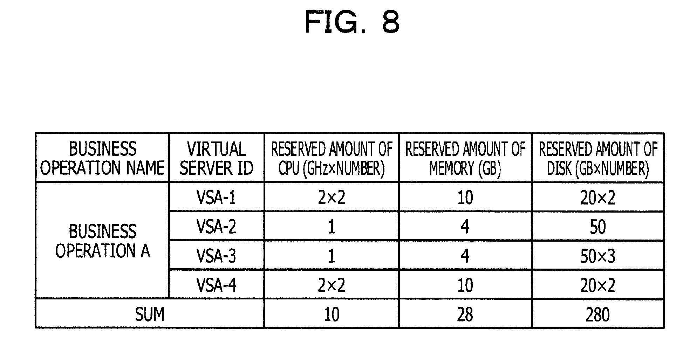

The management device 131 includes a third size storage unit 521 for storing therein the first reserved amount table and the second reserved amount tables. The first reserved amount table will be described later with reference to FIG. 7. The second reserved amount tables will be described later with reference to FIG. 8 to FIG. 12.

Levels in the present embodiment each define a size of a resource to be reserved for rehearsal processing for restoration of a business system. At a first level (level 1), a resource whose size is the same as a resource amount allocated in the business system of the operating site 101 is reserved for the rehearsal processing. At a second level (level 2), a resource whose size is the same as a resource amount actually used in the business system of the operating site 101 at a time point is reserved for the rehearsal processing. At a third level (level 3), a resource whose size is the same as a resource amount allocated in the business system of the operating site 101, in a case of assuming that redundancy is omitted, is reserved for the rehearsal processing. At a fourth level (level 4), a resource whose size is the same as a resource amount assumed to be used in the business system of the operating site 101 at a time point, in a case of omitting redundancy, is reserved for the rehearsal processing. At a fifth level (level 5), a resource sufficient for a resource amount actually used in each virtual server relating to the business system of the operating site 101 is reserved for the rehearsal processing.

Note that, at the level 1 to the level 4, it is assumed that a plurality of virtual servers are simultaneously deployed in the rehearsal processing. At the level 5, on the other hand, it is assumed that a plurality of virtual servers are not simultaneously deployed in the rehearsal processing. In other words, it is assumed that virtual servers are deployed one by one at the level 5.

As illustrated in FIG. 1, the management device 131 includes the control unit 135 that performs control processing. The control unit 135 includes a reception unit 531, a second acquisition unit 533, a fourth size storage unit 535, a second identification unit 537, a determination unit 539, and a start unit 541.

The reception unit 531 receives a condition of rehearsal. The second acquisition unit 533 acquires an available amount of resource in the standby site 111. The fourth size storage unit 535 stores therein the available amount of resource in the standby site 111. When the condition of rehearsal designates a first method (described later), the second identification unit 537 determines whether or not the available amount of resource in the standby site 111 is greater than or equal to a reserved amount of resource at each level with respect to a business operation for which a rehearsal of restoration is to be performed, and identifies an uppermost level at which the reserved amount of resource is less than the available amount of resource in the standby site 111. In this example, an upper level means a level at which the reserved amount is larger. Accordingly, the second identification unit 537 identifies a level at which the reserved amount is a maximum. When the condition of rehearsal designates a second method (described later), the determination unit 539 determines whether the available amount of resource in the standby site 111 is greater than or equal to the reserved amount of resource at a level designated by the condition of rehearsal. The start unit 541 designates a level and starts the rehearsal processing.

The data storage unit 503, the first size storage unit 505, the second size storage unit 509, the third size storage unit 521, and the fourth size storage unit 535 are realized using hardware resources (for example, illustrated in FIG. 24). The first acquisition unit 501, the first identification unit 507, the setting unit 511, the transmission unit 513, the reception unit 531, the second acquisition unit 533, the second identification unit 537, the determination unit 539, and the start unit 541 are realized using hardware resources (for example, illustrated in FIG. 24) and a program that causes a processor to execute a process described below.

Next, the used amount table stored in the second size storage unit 509 will be described. In an example of the used amount table illustrated in FIG. 6, a record is provided for each virtual server. Each record includes a field for setting a name of a business operation to which the relevant virtual server is provided, a field for setting an ID of the relevant virtual server, and a field for setting a used amount of resource for the relevant virtual server. The field for setting the used amount of resource includes a field for setting a used amount of CPU (GHzxnumber), a field for setting a used amount of memory (GB), and a field for setting a used amount of disk (GB×number).

The first record in this table indicates that the virtual server whose ID is "VSA-1" is provided to the "business operation A". This record indicates that, at a time point, a CPU of "2" GHz is used, a memory of "8" GB is used, and a disk of "20" GB is used.

The second record in this table indicates that the virtual server whose ID is "VSA-2" is provided to the "business operation A". This record indicates that, at a time point, a CPU of "1" GHz is used, a memory of "2" GB is used, and a disk of "20" GB is used.

The third record in this table indicates that the virtual server whose ID is "VSA-3" is provided to the "business operation A". This record indicates that, at a time point, a CPU of "1" GHz is used, a memory of "2" GB is used, and a disk of "50" GB is used.

The fourth record in this table indicates that the virtual server whose ID is "VSA-4" is provided to the "business operation A". This record indicates that, at a time point, a CPU of "2" GHz is used, a memory of "8" GB is used, and a disk of "20" GB is used.

The fifth record in this table indicates that the virtual server whose ID is "VSB-1" is provided to the "business operation B". This record indicates that, at a time point, a CPU of "2" GHz is used, a memory of "1" GB is used, and a disk of "20" GB is used.

The sixth record in this table indicates that the virtual server whose ID is "VSB-2" is provided to the "business operation B". This record indicates that, at a time point, a CPU of "1" GHz is used, a memory of "8" GB is used, and a disk of "20" GB is used.

The seventh record in this table indicates that the virtual server whose ID is "VSB-3" is provided to the "business operation B". This record indicates that, at a time point, a CPU of "1" GHz is used, a memory of "8" GB is used, and a disk of "40" GB is used.

Next, the first reserved amount table stored in the third size storage unit 521 will be described. FIG. 7 illustrates an example of the first reserved amount table. This example assumes the system of the business operation A. With respect to the system of the business operation B, the first reserved amount table is separately provided.

In the example of the first reserved amount table illustrated in FIG. 7, a record is provided for each level. Each record includes a field for setting the relevant level, and a field for setting a reserved amount of resource in the entire business system at the relevant level. The field for setting the reserved amount of resource in the entire business system includes a field for setting a reserved amount of CPU (GHzxnumber) in the entire business system, a field for setting a reserved amount of memory (GB) in the entire business system, and a field for setting a reserved amount of disk (GB×number) in the entire business system. The reserved amount of CPU (GHzxnumber) corresponds to the product of the frequencies of reserved CPUs (GHz) and the number of reserved CPUs. The reserved amount of disk (GB×number) corresponds to the product of the capacities of reserved disks (GB) and the number of reserved disks.

The first record in this table indicates that, at the "level 1", CPUs corresponding to "10" GHz×number are reserved in the entire business system, a memory of "28" GB is reserved therein, and disks corresponding to "280" GBxnumber are reserved therein.

The second record in this table indicates that, at the "level 2", CPUs corresponding to "6" GHzxnumber are reserved in the entire business system, a memory of "20" GB is reserved therein, and disks corresponding to "110" GB×number are reserved therein.

The third record in this table indicates that, at the "level 3", CPUs corresponding to "6" GHz×number are reserved in the entire business system, a memory of "18" GB is reserved therein, and disks corresponding to "240" GB×number are reserved therein.

The fourth record in this table indicates that, at the "level 4", CPUs corresponding to "4" GHzxnumber are reserved in the entire business system, a memory of "12" GB is reserved therein, and disks corresponding to "90" GB×number are reserved therein.

The fifth record in this table indicates that, at the "level 5", CPUs corresponding to "2" GHz×number are reserved in the entire business system, a memory of "8" GB is reserved therein, and disks corresponding to "50" GB×number are reserved therein.

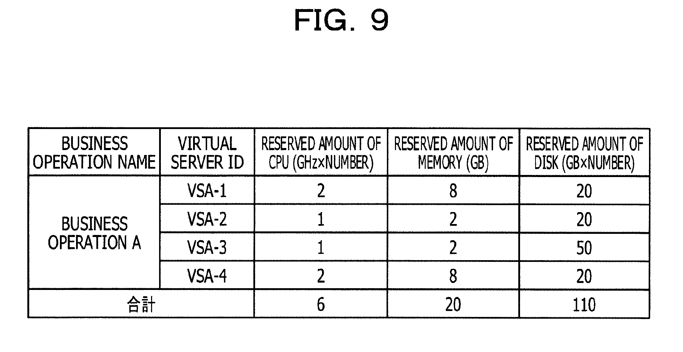

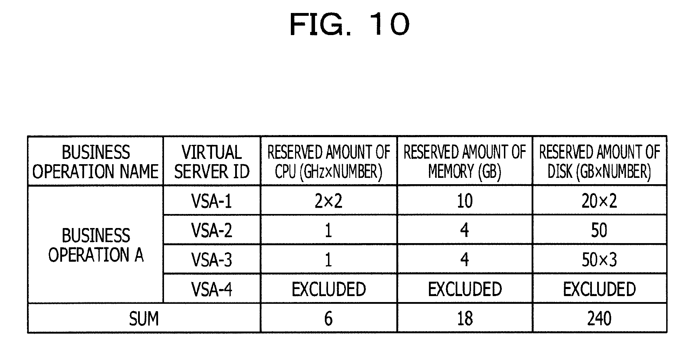

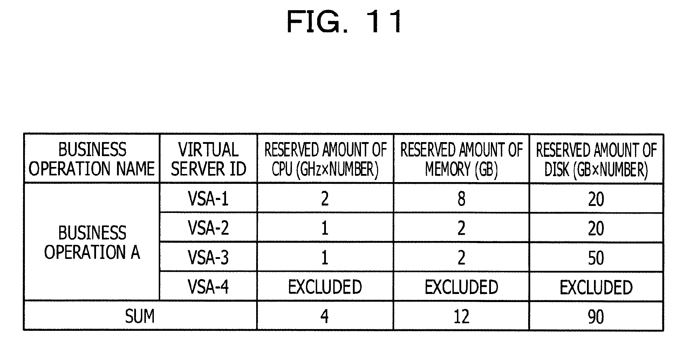

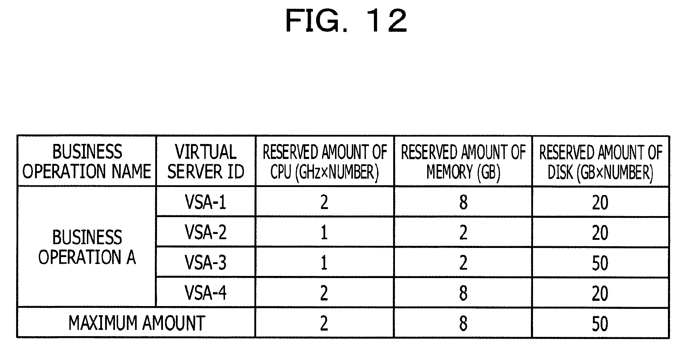

In the third size storage unit 521, in addition to the above-mentioned first reserved amount table, the second reserved amount table for each level is stored. FIG. 8 illustrates an example of the second reserved amount table for the level 1. FIG. 9 illustrates an example of the second reserved amount table for the level 2. FIG. 10 illustrates an example of the second reserved amount table for the level 3. FIG. 11 illustrates an example of the second reserved amount table for the level 4. FIG. 12 illustrates an example of the second reserved amount table for the level 5. Each thereof assumes the system of the business operation A. With respect to the system of the business operation B, the second reserved amount table for each of the level 1 to the level 5 is provided. Details of the second reserved amount tables illustrated in FIG. 8 to FIG. 12 will be described in conjunction with the description of setting processing.

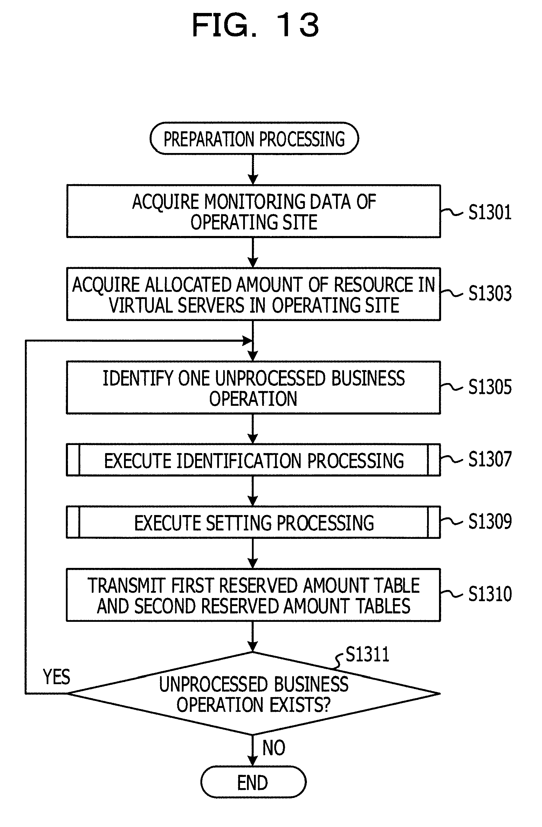

Next, preparation processing performed by the preparation unit 133 will be described. The preparation processing is performed prior to control processing described later. The preparation processing may be performed immediately before the control processing, or may be performed at a timing different from the control processing. FIG. 13 illustrates a flow of the preparation processing. The first acquisition unit 501 acquires the monitoring data of the operating site 101 from the monitoring unit 109 in the management server 107 (S1301). The monitoring data is stored in the data storage unit 503. The monitoring data includes, for example, the used amount of resource measured at predetermined intervals within a predetermined monitoring time period. The used amount of resource includes, for example, the used amount of CPU, the used amount of memory, and the used amount of disk in the virtual servers in the operating site 101.

The first acquisition unit 501 acquires, from the management server 107, the allocated amount of resource in virtual servers in the operating site 101 (S1303). The allocated amount of resource includes, for example, the allocated amount of CPU, the allocated amount of memory, and the allocated amount of disk. The allocated amount of resource in the virtual servers in the operating site 101 is stored in the first size storage unit 505.

The preparation unit 133 identifies one unprocessed business operation from among business operations performed in the relevant business system (S1305). The first identification unit 507 performs identification processing with respect to the relevant business operation (S1307). The identification processing is for identifying the used amount of resource at a time point within the monitoring time period. In this example, a time point at which the used amount of resource is smaller than at another time point is identified, and the used amount of resource at that time point is identified. Specifically, identification processing (A) to identification processing (D) will be sequentially described. The first identification unit 507 may perform any identification processing of the identification processing (A) to the identification processing (D).

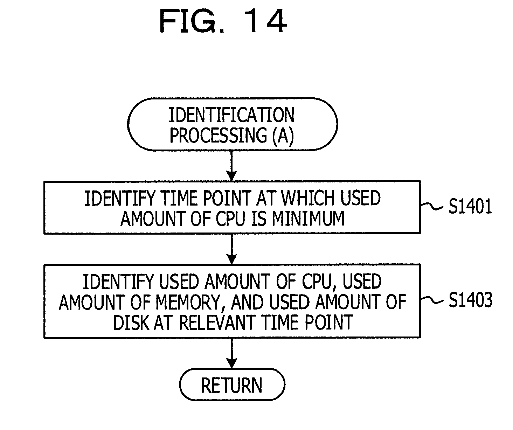

First, the identification processing (A) will be described. FIG. 14 illustrates a flow of the identification processing (A). The first identification unit 507 identifies a time point at which the used amount of CPU is the minimum, within the monitoring time period (S1401). The first identification unit 507 identifies the used amount of CPU, the used amount of memory, and the used amount of disk at the relevant time point (S1403).

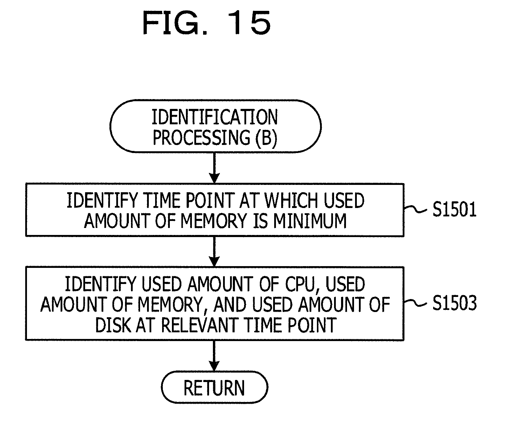

Next, the identification processing (B) will be described. FIG. 15 illustrates a flow of the identification processing (B). The first identification unit 507 identifies a time point at which the used amount of memory is the minimum, within the monitoring time period (S1501). The first identification unit 507 identifies the used amount of CPU, the used amount of memory, and the used amount of disk at the relevant time point (S1503).

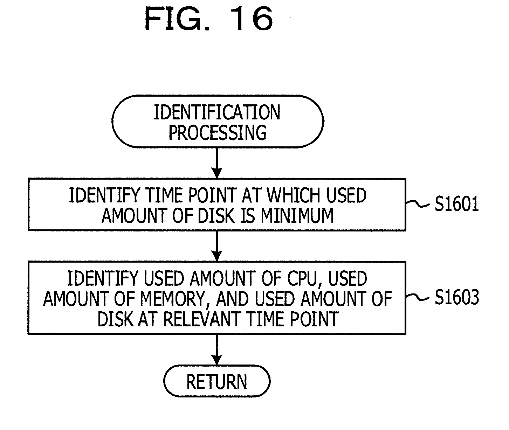

Next, the identification processing (C) will be described. FIG. 16 illustrates a flow of the identification processing (C). The first identification unit 507 identifies a time point at which the used amount of disk is the minimum, within the monitoring time period (S1601). The first identification unit 507 identifies the used amount of CPU, the used amount of memory, and the used amount of disk at the relevant time point (S1603).

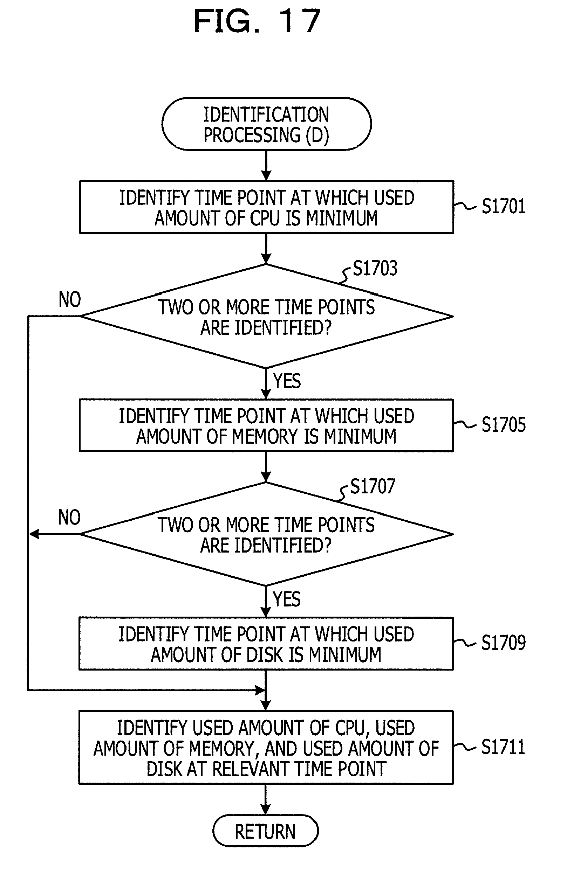

Next, the identification processing (D) will be described. In the identification processing (D), the used amount of CPU is preferentially determined, and next, the used amount of memory is preferentially determined. FIG. 17 illustrates a flow of the identification processing (D). The first identification unit 507 identifies a time point at which the used amount of CPU is the minimum, within the monitoring time period (S1701). In the identification processing (D), a possibility that the minimum value with respect to the used amount of CPU is observed at two or more time points is considered.

The first identification unit 507 determines whether or not two or more time points are identified (S1703). In a case where two or more time points are not identified, in other words, in a case where the minimum value is observed at one time point, the first identification unit 507 identifies the used amount of CPU, the used amount of memory, and the used amount of disk at the relevant time point (S1711). The identified used amount of CPU, the identified used amount of memory, and the identified used amount of disk are stored in the second size storage unit 509.

In a case where two or more time points are identified in S1701, the first identification unit 507 identifies a time point at which the used amount of memory is the minimum, from among these time points (S1705). In the identification processing (D), a possibility that the minimum value with respect to the used amount of memory is observed at two or more time points is considered.

The first identification unit 507 determines whether or not two or more time points are identified (S1707). In a case where two or more time points are not identified, in other words, in a case where the minimum value is observed at one time point, the first identification unit 507 identifies the used amount of CPU, the used amount of memory, and the used amount of disk at the relevant time point (S1711). The identified used amount of CPU, the identified used amount of memory, and the identified used amount of disk are stored in the second size storage unit 509.

In a case where two or more time points are identified in S1705, the first identification unit 507 identifies a time point at which the used amount of disk is the minimum, from among these time points (S1709). In a case where the minimum value is observed at two or more time points with respect to the used amount of disk, any one of the time points may be identified.

The first identification unit 507 identifies the used amount of CPU, the used amount of memory, and the used amount of disk at the relevant time point (S1711). The identified used amount of CPU, the identified used amount of memory, and the identified used amount of disk are stored in the second size storage unit 509.

In each of the above-mentioned identification processing operations (A to D), an example is illustrated in which a used amount corresponding to the minimum is identified. By doing in this way, it is possible to identify the minimum amount of resource in an actual operating state. Accordingly, it is expected that, in the rehearsal processing, it is possible to confirm an operation close to the operating state, using a smaller resource amount. In this regard, however, a used amount larger than the minimum may be identified in order to confirm an operation close to the actual operating state.

Returning to the description of FIG. 13, the setting unit 511 performs setting processing with respect to the business operation identified in S1305 (S1309). The setting unit 511 sets for each level, in the first reserved amount table, the amount of resource to be reserved in the standby site 111 in a rehearsal relating to the relevant business operation. In addition, the setting unit 511 sets, in the second reserved amount tables, the amount of resource to be reserved for each virtual server at respective levels.

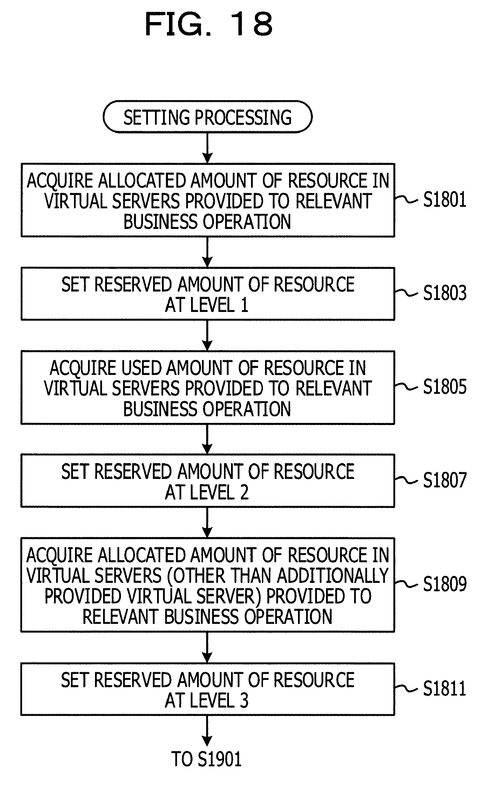

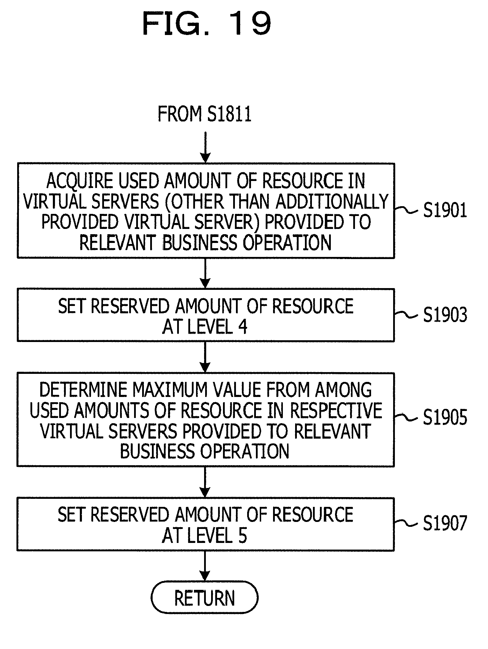

FIG. 18 and FIG. 19 illustrate a flow of the setting processing. In S1801 and S1803, the reserved amount of resource at the level 1 is set. The reserved amount of resource at the level 1 will be described with reference to FIG. 8.

The first record to the fourth record in the second reserved amount table illustrated in FIG. 8 illustrate the reserved amounts of resource in the virtual servers whose IDs are "VSA-1" to "VSA-4", respectively, and which are included in the virtual servers provided to the "business operation A". The reserved amounts are equal to the allocated amounts of resource. The fifth record in the second reserved amount table illustrated in FIG. 8 illustrates the reserved amounts of resource of the entire business system at the level 1. Each of the reserved amounts of the entire business system at the level 1 is the sum of the reserved amounts in the respective virtual servers.

For example, the reserved amount "10" of CPU of the entire business system in this example is the sum of an amount corresponding to "2" CPUs of "2" GHz to be reserved in the virtual server whose ID is "VSA-1", an amount corresponding to a CPU of "1" GHz to be reserved in the virtual server whose ID is "VSA-2", an amount corresponding to a CPU of "1" GHz to be reserved in the virtual server whose ID is "VSA-3", and an amount corresponding to "2" CPUs of "2" GHz to be reserved in the virtual server whose ID is "VSA-4".

For example, the reserved amount "28" of memory of the entire business system in this example is the sum of an amount of "10" GB to be reserved in the virtual server whose ID is "VSA-1", an amount of "4" GB to be reserved in the virtual server whose ID is "VSA-2", an amount of "4" GB to be reserved in the virtual server whose ID is "VSA-3", and an amount of "10" GB to be reserved in the virtual server whose ID is "VSA-4".

For example, the reserved amount "280" of disk of the entire business system in this example is the sum of an amount corresponding to "2" disks of "20" GB to be reserved in the virtual server whose ID is "VSA-1", an amount corresponding to a disk of "50" GB to be reserved in the virtual server whose ID is "VSA-2", an amount corresponding to "3" disks of "50" GB to be reserved in the virtual server whose ID is "VSA-3", and an amount corresponding to "2" disks of "20" GB to be reserved in the virtual server whose ID is "VSA-4".

Returning to the description of FIG. 18, the setting unit 511 acquires the allocated amount of resource in the virtual servers provided to the relevant business operation, from the allocated amount table stored in the first size storage unit 505 (S1801). The setting unit 511 sets, in the second reserved amount table for the level 1, the allocated amount of resource in the virtual servers. In addition, the setting unit 511 sets, in the first reserved amount table, the sum of reserved amounts in the virtual servers (S1803).

In S1805 and S1807, the reserved amount of resource at the level 2 is set. The reserved amount of resource at the level 2 will be described with reference to FIG. 9.

The first record to the fourth record in the second reserved amount table illustrated in FIG. 9 illustrate the reserved amounts of resource in the virtual servers whose IDs are "VSA-1" to "VSA-4", respectively, and which are included in the virtual servers provided to the "business operation A". The reserved amounts are equal to the used amounts of resource. The fifth record in the second reserved amount table illustrated in FIG. 9 illustrates the reserved amounts of resource of the entire business system at the level 2. Each of the reserved amounts of the entire business system at the level 2 is the sum of the reserved amounts in the respective virtual servers.

For example, the reserved amount "6" of CPU of the entire business system in this example is the sum of an amount corresponding to a CPU of "2" GHz to be reserved in the virtual server whose ID is "VSA-1", an amount corresponding to a CPU of "1" GHz to be reserved in the virtual server whose ID is "VSA-2", an amount corresponding to a CPU of "1" GHz to be reserved in the virtual server whose ID is "VSA-3", and an amount corresponding to a CPU of "2" GHz to be reserved in the virtual server whose ID is "VSA-4".

For example, the reserved amount "20" of memory of the entire business system in this example is the sum of an amount of "8" GB to be reserved in the virtual server whose ID is "VSA-1", an amount of "2" GB to be reserved in the virtual server whose ID is "VSA-2", an amount of "2" GB to be reserved in the virtual server whose ID is "VSA-3", and an amount of "8" GB to be reserved in the virtual server whose ID is "VSA-4".

For example, the reserved amount "110" of disk of the entire business system in this example is the sum of an amount corresponding to a disk of "20" GB to be reserved in the virtual server whose ID is "VSA-1", an amount corresponding to a disk of "20" GB to be reserved in the virtual server whose ID is "VSA-2", an amount corresponding to a disk of "50" GB to be reserved in the virtual server whose ID is "VSA-3", and an amount corresponding to a disk of "20" GB to be reserved in the virtual server whose ID is "VSA-4".

Returning to the description of FIG. 18, the setting unit 511 acquires the used amount of resource in the virtual servers provided to the relevant business operation, from the used amount table stored in the second size storage unit 509 (S1805). The setting unit 511 sets, in the second reserved amount table for the level 2, the used amount of resource in the virtual servers. In addition, the setting unit 511 sets, in the first reserved amount table, the sum of reserved amounts in the virtual servers (S1807).

In S1809 and S1811, the reserved amount of resource at the level 3 is set. The reserved amount of resource at the level 3 will be described using FIG. 10.

The first record to the third record in the second reserved amount table illustrated in FIG. 10 illustrate the reserved amounts of resource in the virtual servers whose IDs are "VSA-1" to "VSA-3", respectively, and which are included in the virtual servers provided to the "business operation A". The reserved amounts are equal to the allocated amounts of resource. The fourth record in the second reserved amount table illustrated in FIG. 10 indicates that the allocated amounts of resource in the virtual server whose ID is "VSA-4" and which is included in the virtual servers provided to the "business operation A" are excluded from the summation. The fifth record in the second reserved amount table illustrated in FIG. 10 illustrates the reserved amounts of resource of the entire business system at the level 3. Each of the reserved amounts of the entire business system at the level 3 is the sum of the reserved amounts in the respective virtual servers other than the virtual server additionally provided for redundancy. In this example, an allocated amount in the virtual server, whose ID is "VSA-4" and which is additionally provided for the redundancy of the virtual server whose ID is "VSA-1", is not added. A method for selecting a virtual server for summation of the allocated amounts, from among a plurality of virtual servers made redundant, is not limited to this example. One of the virtual servers may be selected using another method.

For example, the reserved amount "6" of CPU of the entire business system in this example is the sum of an amount corresponding to "2" CPUs of "2" GHz to be reserved in the virtual server whose ID is "VSA-1", an amount corresponding to a CPU of "1" GHz to be reserved in the virtual server whose ID is "VSA-2", and an amount corresponding to a CPU of "1" GHz to be reserved in the virtual server whose ID is "VSA-3".

For example, the reserved amount "18" of memory of the entire business system in this example is the sum of an amount of "10" GB to be reserved in the virtual server whose ID is "VSA-1", an amount of "4" GB to be reserved in the virtual server whose ID is "VSA-2", and an amount of "4" GB to be reserved in the virtual server whose ID is "VSA-3".

For example, the reserved amount "240" of disk of the entire business system in this example is the sum of an amount corresponding to "2" disks of "20" GB to be reserved in the virtual server whose ID is "VSA-1", an amount corresponding to a disk of "50" GB to be reserved in the virtual server whose ID is "VSA-2", and an amount corresponding to "3" disks of "50" GB to be reserved in the virtual server whose ID is "VSA-3".

Returning to the description of FIG. 18, the setting unit 511 acquires the allocated amounts of resource in the virtual servers (other than the additionally provided virtual server) provided to the relevant business operation, from the allocated amount table stored in the first size storage unit 505 (S1809). The setting unit 511 sets, in the second reserved amount table for the level 3, the allocated amount of resource in the virtual servers. In addition, the setting unit 511 sets, in the first reserved amount table, the sum of reserved amounts in the virtual servers (S1811). The processing shifts to S1901 illustrated in FIG. 19.

In S1901 and S1903, the reserved amount of resource at the level 4 is set. The reserved amount of resource at the level 4 will be described with reference to FIG. 11.

The first record to the third record in the second reserved amount table illustrated in FIG. 11 illustrate the reserved amounts of resource in the virtual servers whose IDs are "VSA-1" to "VSA-3", respectively, and which are included in the virtual servers provided to the "business operation A". The reserved amounts are equal to the used amounts of resource. The fourth record in the second reserved amount table illustrated in FIG. 11 indicates that the used amounts of resource in the virtual server whose ID is "VSA-4" and which is included in the virtual servers provided to the "business operation A" are excluded from the summation. The fifth record in the second reserved amount table illustrated in FIG. 11 illustrates the reserved amounts of resource of the entire business system at the level 4. Each of the reserved amounts of the entire business system at the level 4 is the sum of the reserved amounts in the respective virtual servers other than the virtual server additionally provided for redundancy. In this example, a used amount in the virtual server, whose ID is "VSA-4" and which is additionally provided for the redundancy of the virtual server whose ID is "VSA-1", is not added.

For example, the reserved amount "4" of CPU of the entire business system in this example is the sum of an amount corresponding to a CPU of "2" GHz to be reserved in the virtual server whose ID is "VSA-1", an amount corresponding to a CPU of "1" GHz to be reserved in the virtual server whose ID is "VSA-2", and an amount corresponding to a CPU of "1" GHz to be reserved in the virtual server whose ID is "VSA-3".

For example, the reserved amount "12" of memory of the entire business system in this example is the sum of an amount of "8" GB to be reserved in the virtual server whose ID is "VSA-1", an amount of "2" GB to be reserved in the virtual server whose ID is "VSA-2", and an amount of "2" GB to be reserved in the virtual server whose ID is "VSA-3".

For example, the reserved amount "90" of disk of the entire business system in this example is the sum of an amount corresponding to a disk of "20" GB to be reserved in the virtual server whose ID is "VSA-1", an amount corresponding to a disk of "20" GB to be reserved in the virtual server whose ID is "VSA-2", and an amount corresponding to a disk of "50" GB to be reserved in the virtual server whose ID is "VSA-3".

Returning to the description of FIG. 19, the setting unit 511 acquires the used amount of resource in the virtual servers (other than the additionally provided virtual server) provided to the relevant business operation, from the used amount table stored in the second size storage unit 509 (S1901). The setting unit 511 sets, in the second reserved amount table for the level 4, the used amount of resource in the virtual servers. In addition, the setting unit 511 sets, in the first reserved amount table, the sum of reserved amounts in virtual servers (S1903).

In S1905 and S1907, the reserved amount of resource at the level 5 is set. The reserved amount of resource at the level 5 will be described with reference to FIG. 12.

The first record to the fourth record in the second reserved amount table illustrated in FIG. 12 illustrate the reserved amounts of resource in the virtual servers whose IDs are "VSA-1" to "VSA-4", respectively, and which are included in the virtual servers provided to the "business operation A". The reserved amounts are equal to the used amounts of resource. The fifth record in the second reserved amount table illustrated in FIG. 12 illustrates the reserved amounts of resource of the entire business system at the level 5. Each of the reserved amounts of the entire business system at the level 5 is the maximum value from among the reserved amounts in the respective virtual servers.

For example, the reserved amount "2" of CPU of the entire business system in this example is the maximum value from among an amount corresponding to a CPU of "2" GHz used by the virtual server whose ID is "VSA-1", an amount corresponding to a CPU of "1" GHz used by the virtual server whose ID is "VSA-2", an amount corresponding to a CPU of "1" GHz used by the virtual server whose ID is "VSA-3", and an amount corresponding to a CPU of "2" GHz used by the virtual server whose ID is "VSA-4".

For example, the reserved amount "8" of memory of the entire business system in this example is the maximum value from among an amount of "8" GB used by the virtual server whose ID is "VSA-1", an amount of "2" GB used by the virtual server whose ID is "VSA-2", an amount of "2" GB used by the virtual server whose ID is "VSA-3", and an amount of "8" GB used by the virtual server whose ID is "VSA-4".

For example, the reserved amount "50" of disk of the entire business system in this example is the maximum value from among an amount corresponding to a disk of "20" GB used by the virtual server whose ID is "VSA-1", an amount corresponding to a disk of "20" GB used by the virtual server whose ID is "VSA-2", an amount corresponding to a disk of "50" GB used by the virtual server whose ID is "VSA-3", and an amount corresponding to a disk of "20" GB used by the virtual server whose ID is "VSA-4".

Returning to the description of FIG. 19, the setting unit 511 determines the maximum values from among used amounts of resource in the virtual servers provided to the relevant business operation (S1905). The setting unit 511 sets, in the second reserved amount table for the level 5, the used amounts of the resources in the virtual servers. In addition, the setting unit 511 sets the determined maximum values in the first reserved amount table (S1907).

Returning to the description of FIG. 13, the transmission unit 513 transmits, to the rehearsal unit 121, the first reserved amount table and the second reserved amount tables, stored in the third size storage unit 521 (S1310). The rehearsal unit 121 holds the received first reserved amount table and second reserved amount tables.

The preparation unit 133 determines whether or not an unprocessed business operation exists (S1311). If it is determined that an unprocessed business operation exists regarding S1307 and S1309, the preparation unit 133 returns to S1305, and repeats the above-mentioned processing operation.

If it is determined that no business operation to be processed in S1307 and S1309 exists, the preparation unit 133 terminates the preparation processing.

Next, the control processing will be described. In the control processing, If it is determined that the available amount of resource in the standby site 111 is greater than or equal to the reserved amount of resource at a certain level, a rehearsal at the relevant level is started.

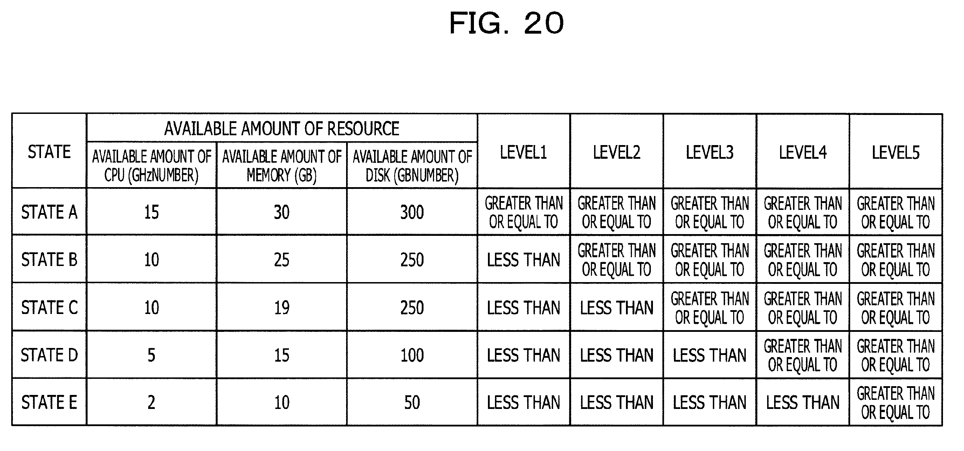

FIG. 20 exemplifies whether or not it is determined that the assumed available amount of resource is greater than or equal to the reserved amount of resource. FIG. 20 illustrates, in a table form, an assumed state and the determination result for each level in the relevant state.

The first record in this table indicates that, in a "state A" in which CPUs corresponding to "15" GHzxnumber are available, a memory of "30" GB is available, and disks corresponding to "300" GB×number are available, a determination result in which the available amount of resource is "greater than or equal to" the reserved amount is obtained for each of the level 1 to the level 5.

The second record in this table indicates that, in a "state B" in which CPUs corresponding to "10" GHzxnumber are available, a memory of "25" GB is available, and disks corresponding to "250" GB×number are available, a determination result in which the available amount of resource is "less than" the reserved amount is obtained for the level 1 and a determination result in which the available amount of resource is "greater than or equal to" the reserved amount is obtained for each of the level 2 to the level 5.

The third record in this table indicates that, in a "state C" in which CPUs corresponding to "10" GHz×number are available, a memory of "19" GB is available, and disks corresponding to "250" GBxnumber are available, a determination result in which the available amount of resource is "less than" the reserved amount is obtained for each of the level 1 and the level 2 and a determination result in which the available amount of resource is "greater than or equal to" the reserved amount is obtained for each of the level 3 to the level 5.

The fourth record in this table indicates that, in a "state D" in which CPUs corresponding to "5" GHz×number are available, a memory of "15" GB is available, and disks corresponding to "100" GBxnumber are available, a determination result in which the available amount of resource is "less than" the reserved amount is obtained for each of the level 1 to the level 3 and a determination result in which the available amount of resource is "greater than or equal to" the reserved amount is obtained for each of the level 4 and the level 5.

The fifth record in this table indicates that, in a "state E" in which CPUs corresponding to "2" GHzxnumber are available, a memory of "10" GB is available, and disks corresponding to "50" GB×number are available, a determination result in which the available amount of resource is "less than" the reserved amount is obtained for each of the level 1 to the level 4 and a determination result in which the available amount of resource is "greater than or equal to" the reserved amount is obtained for the level 5.

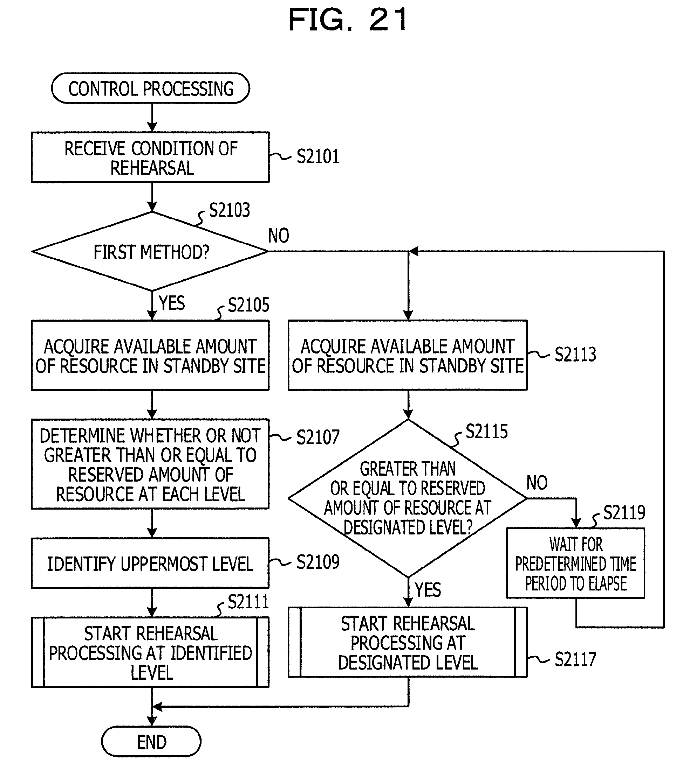

Next, a flow of the control processing will be described. Rehearsal processing described later is started by the control processing. FIG. 21 illustrates a flow of the control processing. Here, an example in which a rehearsal is controlled in units of business operations will be described.

In the present embodiment, two methods for leading to starting of a rehearsal are adopted. In a first method, a rehearsal is immediately implemented. In this method, the control unit 135 automatically selects a level. In a second method, a rehearsal is implemented at a designated level. In this method, a rehearsal is implemented at a timing when it is possible to reserve a resource at the designated level.

First, the reception unit 531 receives a condition of rehearsal (S2101). The condition of rehearsal includes designation of a business operation. Furthermore, the condition of rehearsal includes selection of one of the above-mentioned first and second methods. In a case where the second method is selected, the condition of rehearsal also includes designation of a level. In other words, the reception unit 531 receives the designation of a business operation, and receives the selection of one of the first and second methods. Furthermore, in a case where the second method is selected, the reception unit 531 receives the designation of a level.

The reception unit 531 determines whether or not the first method is selected (S2103). If it is determined that the first method is selected, the second acquisition unit 533 acquires the available amount of resource in the standby site 111, from the monitoring unit 119 in the management server 117 (S2105). The available amount of resource in this example includes the available amount of CPU, the available amount of memory, and the available amount of disk. The acquired available amount of resource is stored in the fourth size storage unit 535.

The second identification unit 537 determines whether or not the above-mentioned available amount of resource is greater than or equal to the reserved amount of resource at each level in the relevant business operation (S2107), and identifies the uppermost level (S2109). The start unit 541 starts rehearsal processing at the identified level (S2111). At this time, the start unit 541 notifies the rehearsal unit 121 in the management server 117 of the business operation designated by the condition of rehearsal and the level in the rehearsal processing to start the operation. Thereafter, the control unit 135 terminates the control processing.

If it is determined, in S2103, that the first method is not selected, in other words, the second method is selected, the second acquisition unit 533 acquires the available amount of resource in the standby site 111 from the monitoring unit 119 in the management server 117, similarly to in S2105 (S2113).

The determination unit 539 determines whether or not the above-mentioned available amount of resource is greater than or equal to the reserved amount of resource at the level designated by the condition of rehearsal (S2115).

If it is determined that the above-mentioned available amount of resource is greater than or equal to the reserved amount of resource at the level designated by the condition of rehearsal, the start unit 541 starts the rehearsal processing at the designated level (S2117). At this time, the start unit 541 notifies the rehearsal unit 121 in the management server 117 of the business operation designated by the condition of rehearsal and the level in the rehearsal processing to start the operation. Thereafter, the control unit 135 terminates the control processing.

If it is determined in S2115 that the above-mentioned available amount of resource is less than the reserved amount of resource at the level designated by the condition of rehearsal, the determination unit 539 waits for a predetermined time period to elapse (S2119). Then, the control unit 135 returns to S2113 to repeat the above-mentioned processing.

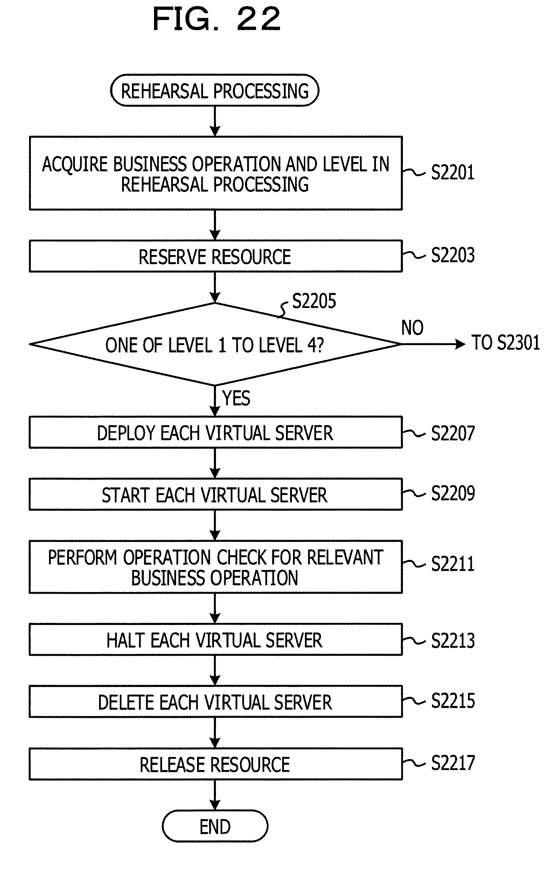

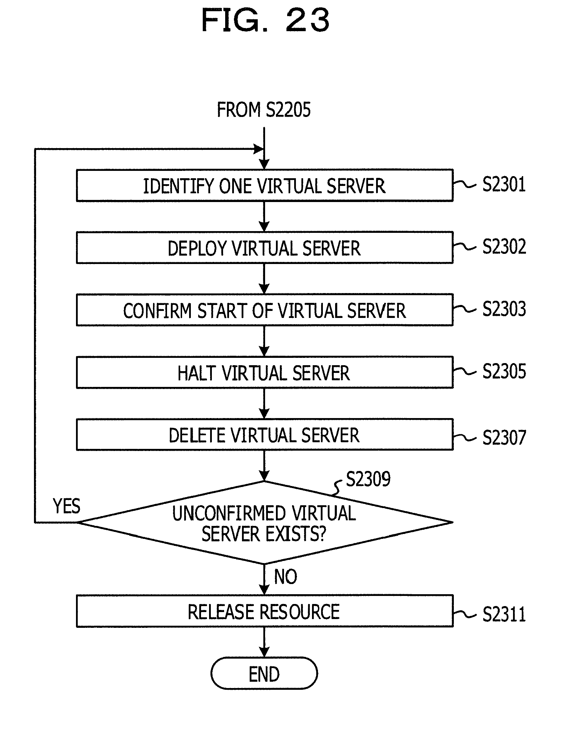

Finally, the rehearsal processing performed by the rehearsal unit 121 in the management server 117 will be described. FIG. 22 and FIG. 23 illustrate a flow of the rehearsal processing. As described above, the rehearsal unit 121 acquires, from the management device 131, the business operation for which a rehearsal is to be performed and the level in the rehearsal processing (S2201). Based on the first reserved amount table, the rehearsal unit 121 identifies the reserved amount of resource at the relevant level, and reserves a resource corresponding to the identified reserved amount (S2203). The rehearsal unit 121 determines whether or not the level in the rehearsal processing is one of the level 1 to the level 4 (S2205).

If it is determined that the level in the rehearsal processing is one of the level 1 to the level 4, the rehearsal unit 121 deploys each virtual server on the basis of the configuration information 411, the system image 413, and the user data 415, illustrated in FIG. 4 (S2207).

At this time, based on the second reserved amount table identified by both the relevant business operation and the relevant level, the rehearsal unit 121 identifies the reserved amount of resource for each virtual server, and allocates the identified reserved amount of resource to each virtual server. Furthermore, the rehearsal unit 121 sets a virtual network.

The rehearsal unit 121 starts each deployed virtual server (S2209). The rehearsal unit 121 performs an operation check regarding the business operation for which the rehearsal is performed (S2211). At this time, the rehearsal unit 121 may perform an operation check according to the level.

For example, when the level in the rehearsal processing is the level 1, an operation check (a test relating to a limit value, for example) may be performed in which a relatively high processing load is applied to each virtual server. An operation check accompanied by communication between virtual servers may be performed as well. An operation check relating to redundancy may also be performed.

When the level in the rehearsal processing is the level 2, an operation check (a test for setting an initial value, for example) may be performed in which only a relatively low processing load is applied to each virtual server. An operation check accompanied by communication between virtual servers may be performed as well. An operation check relating to redundancy may also be performed.

When the level in the rehearsal processing is the level 3, an operation check (a test relating to a limit value, for example) may be performed in which, a relatively high processing load is applied to each virtual server. An operation check accompanied by communication between virtual servers may be performed as well. However, since a result of an operation check relating to redundancy fails, the operation check relating to redundancy may be omitted.

When the level in the rehearsal processing is the level 4, an operation check (a test for setting an initial value, for example) may be performed in which only a relatively low processing load is applied to each virtual server. An operation check accompanied by communication between virtual servers may be performed as well. However, since a result of an operation check relating to redundancy fails, the operation check relating to redundancy may be omitted.

Upon terminating the operation check regarding the business operation, the rehearsal unit 121 halts each virtual server (S2213), and deletes each halted virtual server (S2215). Finally, the rehearsal unit 121 releases the resource reserved in S2203 (S2217), and terminates the rehearsal processing.

If it is determined, in S2205, that the level in the rehearsal processing is not one of the level 1 to the level 4, in other words, the level in the rehearsal processing is the level 5, the processing shifts to S2301 illustrated in FIG. 23.

When the level in the rehearsal processing is the level 5, virtual servers provided to the business operation for which the rehearsal is performed are confirmed one by one. The rehearsal unit 121 identifies one of the virtual servers provided to the business operation for which the rehearsal is performed (S2301).

The rehearsal unit 121 deploys the relevant virtual server on the basis of the configuration information 411, the system image 413, and the user data 415, illustrated in FIG. 4 (S2302). At this time, based on the second reserved amount table for the level 5, the rehearsal unit 121 identifies the reserved amount of resource for the relevant virtual server, and allocates the identified reserved amount of resource to the relevant virtual server. The rehearsal unit 121 starts the deployed virtual server, and confirms the result of the start (S2303). At this time, the rehearsal unit 121 may perform a unit test relating to the relevant virtual server to perform an operation check as a unit.

The rehearsal unit 121 halts the relevant virtual server (S2305), and deletes the halted virtual server (S2307). The rehearsal unit 121 determines whether or not a virtual server not identified in S2301 exists (S2309). If it is determined that a virtual server not identified in S2301 exists, the rehearsal unit 121 returns to S2301 to repeat the above-mentioned processing.

If it is determined that a virtual server not identified in S2301 does not exist, finally the rehearsal unit 121 releases the resource reserved in S2203 (S2311), and terminates the rehearsal processing.

According to the present embodiment, since rehearsal processing corresponding to the availability of a resource in a standby site is performed, it is possible to selectively confirm a restoration operation at an arbitrarily operable level.

It is possible to provide the level 2 at which a resource whose size is the same as that of a resource actually used in an operating site is reserved.

It is possible to provide the level 4 at which a resource whose size is the same as that of a resource assumed to be used in an operating site in a configuration whose redundancy is omitted is reserved.

Since the minimum used amount is identified, threshold values set at the level 2 and the level 4 become small, and the number of cases conforming to these levels increases.

It is possible to provide the level 3 at which a resource whose size is the same as that of a resource assumed to be allocated in an operation in a configuration whose redundancy is omitted is reserved.

It is possible to provide the level 5 at which a resource whose size is the same as that of an actually used resource is able to be reserved in units of virtual machines.

While one embodiment is described, the embodiments are not limited to this. For example, in some cases, the above-mentioned functional configuration does not coincide with a configuration of program nodules.

The configuration of each storage area described above is just an example, and a configuration other than the above-mentioned configuration may be adopted. In the flows of processing, the order of processing operations may be rearranged if a processing result does not change. Furthermore, processing operations may be performed in parallel.

The management server 107, the management server 117, and the management device 131, described above, are computer devices, and in each thereof, as illustrated in FIG. 24, a memory 2501, a central processing unit (CPU) 2503, a hard disk drive (HDD) 2505, a display control unit 2507 connected to a display device 2509, a drive device 2513 for a removable disk 2511, an input device 2515, and a communication control unit 2517 for connecting to a network. These components are connected to one another through a bus 2519. An operating system (OS) and an application program for implementing processing in the present embodiment are stored in the HDD 2505, and read from the HDD 2505 to the memory 2501 when being executed by the CPU 2503. In accordance with the processing content of the application program, the CPU 2503 controls and causes the display control unit 2507, the communication control unit 2517, and the drive device 2513 to perform predetermined operations. Data in processing is mainly stored in the memory 2501. The data in processing may be stored in the HDD 2505. The application program for implementing the above-mentioned processing is stored in the computer-readable removable disk 2511, distributed, and installed into the HDD 2505 via the drive device 2513. In some cases, the application program is installed into the HDD 2505 through a network such as the Internet via the communication control unit 2517. Pieces of hardware such as the CPU 2503 and the memory 2501 and programs such as the OS and the application program organically collaborate with one another, and hence, such various kinds of functions as described above are realized.

The embodiment described above is summarized as follows.

An information processing system according to the present embodiment includes a processor. The processor is configured to acquire availability of a resource in a second site that holds data used for restoration of a system operating in a first site. The processor is configured to identify a level to which the availability conforms, from among a plurality of levels corresponding to respective sizes of resource to be reserved for rehearsal processing for the restoration. The processor is configured to start the rehearsal processing corresponding to the identified level.

By doing in this way, since rehearsal processing corresponding to the availability of a resource in the second site is started, it is possible to selectively confirm a restoration operation at an arbitrarily operable level.

The processor may be configured to acquire a first used amount of resource in the system. The first used amount is monitored in the first site. The processor may be configured to set one of the sizes on the basis of the first used amount.

By doing in this way, it is possible to provide a level at which a resource whose size is similar to that of a resource actually used in the first site is reserved.

The processor may further be configured to subtract a second used amount for redundancy in the system from the first used amount to obtain a residual used amount, and set one of the sizes on basis of the residual used amount.

By doing in this way, it is possible to provide a level at which a resource whose size is similar to that of a resource assumed to be used in the first site in a configuration whose redundancy is omitted is reserved.

The processor may be configured to compare used amounts of resource at a plurality of time points to use, as the first used amount, the lowest used amount among the compared used amounts.

By doing in this way, since a set threshold value becomes small, it is possible to provide a level easy to conform to.

The processor may be configured to acquire a first allocated amount of resource for the system in the first site, and set one of the sizes on the basis of the first allocated amount.

By doing in this way, it is possible to provide a level at which a resource whose size is similar to that of a resource assumed to be allocated in the first site is reserved.

The processor may further be configured to subtract a second allocated amount for redundancy in the system from the first allocated amount to obtain a residual allocated amount, and set one of the sizes on the basis of the residual allocated amount.

By doing in this way, it is possible to provide a level at which a resource whose size is similar to that of a resource assumed to be allocated in the first site in a configuration whose redundancy is omitted is reserved.

The processor may be configured to acquire used amounts of resource in respective virtual machines included in the system. The used amounts are monitored in the first site. The processor may be configured to set one of the sizes on the basis of the maximum used amount among the acquired used amounts.

By doing in this way, it is possible to provide a level at which a resource whose size is similar to that of an actually used resource is able to be reserved in units of virtual machines.

The information processing system may further include a second processor. The second processor is configured to perform the rehearsal processing corresponding to the identified level.

By doing in this way, since rehearsal processing corresponding to the availability of a resource in the second site is started, it is possible to selectively confirm a restoration operation at an arbitrarily operable level.

It is possible to create a program for causing a computer to perform the above-mentioned processing in each of the management device and the information processing system, and the relevant program may be stored in, for example, a computer-readable storage medium or a storage device, such as a flexible disk, a compact disc read-only memory (CD-ROM), a magnet-optical disk, a semiconductor memory, or a hard disk. An intermediate processing result is usually temporarily stored in a storage device such as a main memory.

## Claims

1. An information processing system, comprising:
a processor configured to
acquire availability of a resource in a second site that holds data used for restoration of a system operating in a first site,
identify a level to which the availability conforms, from among a plurality of levels corresponding to respective sizes of resource to be reserved for rehearsal processing for the restoration, and
start the rehearsal processing corresponding to the identified level.

2. The information processing system according to claim 1, wherein the processor is further configured to
acquire a first used amount of resource in the system, the first used amount being monitored in the first site, and
set one of the sizes on basis of the first used amount.

3. The information processing system according to claim 1, wherein the processor is further configured to
acquire a first used amount of resource in the system, the first used amount being monitored in the first site,
subtract a second used amount for redundancy in the system from the first used amount to obtain a residual used amount, and
set one of the sizes on basis of the residual used amount.

4. The information processing system according to claim 2 or 3, wherein the processor is further configured to
compare used amounts of resource at a plurality of time points, and
use, as the first used amount, a lowest used amount among the compared used amounts.

5. The information processing system according to claim 1, wherein the processor is further configured to
acquire a first allocated amount of resource for the system in the first site, and
set one of the sizes on basis of the first allocated amount.

6. The information processing system according to claim 1, wherein the processor is further configured to
acquire a first allocated amount of resource for the system in the first site,
subtract a second allocated amount for redundancy in the system from the first allocated amount to obtain a residual allocated amount, and
set one of the sizes on basis of the residual allocated amount.

7. The information processing system according to claim 1, wherein the processor is further configured to
acquire used amounts of resource in respective virtual machines included in the system, the used amounts being monitored in the first site, and
set one of the sizes on basis of a maximum used amount among the acquired used amounts.

8. The information processing system according to any one of claims 1 to 7, further comprising:
a second processor configured to
perform the rehearsal processing corresponding to the identified level.

9. A computer-readable recording medium having stored therein a program for causing a computer to execute a process, the process comprising:
acquiring availability of a resource in a second site that holds data used for restoration of a system operating in a first site;
identifying a level to which the availability conforms, from among a plurality of levels corresponding to respective sizes of resource to be reserved for rehearsal processing for the restoration; and
starting the rehearsal processing corresponding to the identified level.
